# EUROPEAN PATENT APPLICATION

(11) **EP 4 435 804 A1**
(43) Date of publication of application: **25.09.2024**
(21) Application number: 23164155.6
(22) Date of filing: 24.03.2023
(51) Int. Cl.: H01B 7/32, H01B 9/00, H02G 5/06, B60L 53/18, H01B 7/42, H01B 7/08

(54) **MODULAR BUSBAR AND MODULAR CHARGING ELEMENT FOR AN ELECTRIC VEHICLE CHARGING AREA**

(71) Applicant: ABB E-mobility B.V., 2629 JG Delft (NL)
(72) Inventor: SCHULER, Gabriel, 6415 Arth (CH); HE, Minglong, 5400 Baden (CH); TROENDLE, Pirmin, 79761 Waldshut-Tiengen (DE); LANDMANN, Daniel, 4125 Riehen (CH)
(74) Representative: Zimmermann & Partner Patentanwälte mbB

(57) **Abstract**

The present disclosure provides a modular busbar, a modular charging element, and an electric vehicle charging area comprising a plurality of said modular busbars and charging elements. The modular busbar according of the present disclosure includes an outer housing, at least two conductors, at least one communications line, and at least one impact detector embedded within the modular busbar. The modular charging element of the present disclosure is suitable for attaching to the modular busbar, and includes a charging connection for connecting an electric vehicle to the modular busbar. The modular components provide a safe, reliable and low-cost solution for outfitting a parking area with electric vehicle charging infrastructure with low installation effort, while further offering enhanced flexibility in charging operation across a charging network.

## Description

### TECHNICAL FIELD

Embodiments of the present disclosure relate to a modular busbar, a modular charging element which is configured to attach to the modular busbar, and an electric vehicle charging area comprised of the modular busbars and charging elements. More particularly, embodiments of the present disclosure relate to a modular system of components for electric vehicle charging infrastructure which provides low-cost and efficient installation, improved safety and reliability, and easy retrofitting of electric vehicle charging infrastructure in existing parking areas.

### BACKGROUND

Electrification of transport in general and private electrical vehicles have increased the demand for charging options at public and private owned parking areas. For example, company parking areas represent an option to recharge cars during office hours. In the current state of the art, scheduling of multiple charge positions by single charging units with movable chargers or a set of switches and conductor lines for distribution to the single parking lots are becoming common, allowing improvements in flexibility with respect to when vehicles are charged based on usage and demand.

However, the usual installation of conductor lines for electric vehicle charging infrastructure typically involves extensive and cost-intensive ground and installation work, such as digging, ground opening, cabling, cable channel closing, ground filling and surface coverage. Further, maintaining the safety and reliability of the charging infrastructure is an important objective. The conductors are required to be protected from weather, vehicle impacts and damage, which necessitates below-ground installation in current infrastructure.

In view of the problems commonly encountered in the current state of the art, solutions are sought which provide safe, reliable current distribution at low cost and low installation effort, while also allowing for the flexible management of charging multiple electric vehicles. Further, solutions are sought for overcoming challenges associated with retrofitting existing parking areas with electric vehicle charging infrastructure with low cost and low installation effort.

### SUMMARY

In view of the above challenges and problems arising in the state of the art, improved apparatus, systems and methods for the installation and operation of electric vehicle charging systems are sought.

According to a first aspect of the present disclosure, a modular busbar is provided. The modular busbar has a first end and a second end, and includes at least two conductors embedded within the modular busbar, such that the at least two conductors extend from the first end to the second end, an electrical connector provided at each respective end of the at least two conductors configured for electrically connecting the at least two conductors to an element attached to the modular busbar, at least one communications line embedded within the modular busbar, such that the at least one communications line extends at least from the first end to the second end, and at least one impact detector embedded within the modular busbar which is configured for detecting a vehicle rollover, an impact, and/or damage to the modular busbar.

According to a second aspect of the present disclosure, a modular charging element is provided. The modular charging element is configured for attaching to the modular busbar according to the first aspect, and includes a charging connection for connecting an electric vehicle to the modular busbar, at least two electrical connectors configured for electrically attaching to the respective electrical connectors of the modular busbar, and at least one communications connector configured for attaching to the at least one communications line of the modular busbar, wherein the charging connection is attached to the at least two conductors via the at least two electrical connectors and to the at least one communications line via the at least one communications connector.

According to a third aspect of the present disclosure, an electric vehicle charging area is provided. The electric vehicle charging area is suitable for charging at least one electric vehicle, and includes at least one charging spot, at least one electric vehicle supply equipment (EVSE) apparatus, at least one modular charging element according to the second aspect arranged at the respective charging spots and for connecting to the respective electric vehicle, and at least one modular busbar according to the first aspect for connecting the plurality of modular charging elements with the at least one electric vehicle supply equipment (EVSE) apparatus. According to a fourth aspect of the present disclosure, a method of charging at least one electric vehicle is provided. The method includes providing at least one electric vehicle supply equipment (EVSE) apparatus, providing at least one modular charging element according to the second aspect, connecting the at least one modular charging element to the at least one electric vehicle supply equipment (EVSE) apparatus with at least one modular busbar according to the first aspect, connecting the respective electric vehicle to the respective charging connection of the at least one modular charging element, and managing the charging of the at least one electric vehicle by selectively energizing and/or de-energizing the respective charging connection of the at least one modular charging element.

Other embodiments include (non-volatile) computer-readable storage media or devices, and one or more computer programs recorded on one or more computer-readable storage media or computer storage devices. The one or more computer programs can be configured to perform particular operations or processes by virtue of including instructions that, when executed by one or more processors of a system, in particular a system as explained herein, cause the system to perform the operations or processes.

The aspects and embodiments of the present disclosure provide a group of modular, interconnecting components which allows for vehicle charging currents to be reliably and safely provided to multiple vehicles in an electric vehicle charging area. Installation of the modular components is very flexible, fast and low-cost due to its modular approach, providing multiple installation options with easy fixation/anchoring and built-in safety features. The aspects and embodiments described herein allows for cost per charging spot to be reduced, plus additional plug and switch options without extensive groundwork, and the modular system described herein is highly suitable for retrofitting of existing parking areas. The standardized modular units may be mass-produced, allowing for further reductions in cost and installation effort.

Those skilled in the art will recognize additional features and advantages upon reading the following detailed description, and upon viewing the accompanying drawings.

### BRIEF DESCRIPTION OF THE DRAWINGS

The components in the figures are not necessarily to scale, instead emphasis being placed upon illustrating the principles of the invention. Moreover, in the figures, like reference numerals designate corresponding parts. In the drawings:
- Fig. 1: illustrates a schematic plan views of a modular busbar according to embodiments of the present disclosure;
- Figs. 2a-2c: illustrate a cross-sectional views of a modular busbar according to embodiments of the present disclosure;
- Fig. 3: illustrates a cross-sectional view of a modular busbar according to embodiments of the present disclosure;
- Figs. 4a-4d: illustrate schematic side views of the installation positions for modular busbars according to embodiments of the present disclosure;
- Fig. 5: illustrates a cross-sectional front view and a schematic side view of a socket-type modular charging element according to embodiments of the present disclosure;
- Fig. 6: illustrates a cross-sectional front view and a schematic side view of a retractable-type modular charging element according to embodiments of the present disclosure;
- Fig. 7: illustrates a cross-sectional front view and a schematic side view of a stop bumper retractable-type modular charging element according to embodiments of the present disclosure;
- Fig. 8: illustrates a schematic plan view of an electric vehicle charging area according to embodiments of the present disclosure;
- Fig. 9: illustrates a cross-sectional front view and a schematic side view of a modular switch element; and
- Figs. 10a-10b: illustrate a schematic plan view of an electric vehicle charging area according to embodiments of the present disclosure.

### DETAILED DESCRIPTION

Reference will now be made in detail to the various embodiments, one or more examples of which are illustrated in each figure. Each example is provided by way of explanation and is not meant as a limitation. For example, features illustrated or described as part of one embodiment can be used on or in conjunction with any other embodiment to yield yet a further embodiment. It is intended that the present disclosure includes such modifications and variations.

Within the following description of the drawings, the same reference numbers refer to the same or to similar components. Generally, only the differences with respect to the individual embodiments are described. Unless specified otherwise, the description of a part or aspect in one embodiment applies to a corresponding part or aspect in another embodiment as well.

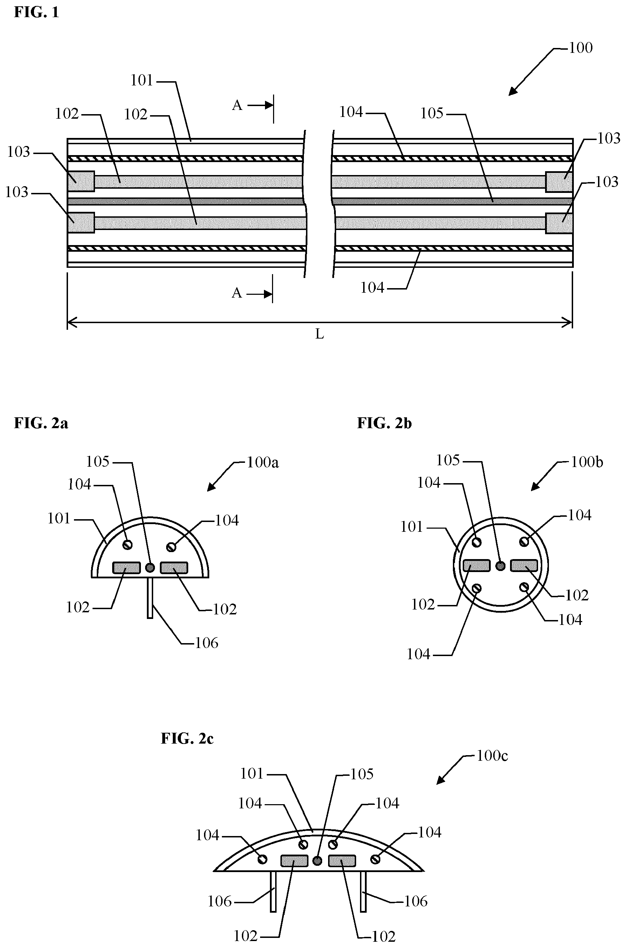

The following disclosure relates to the first aspect and embodiments of the present disclosure, in which a modular busbar is provided. Reference will be made to Fig. 1, which shows a cross-sectional top view of an exemplary modular busbar 100. The modular busbar 100 has a first end and a second end, and includes at least two conductors 102 embedded within the modular busbar 100, such that the at least two conductors 102 extend from the first end to the second end, an electrical connector 103 provided at each respective end of the at least two conductors 102 configured for electrically connecting the at least two conductors 102 to an element attached to the modular busbar 100, at least one communication line 105 embedded within the modular busbar 100, such that the at least one communications line 105 extends at least from the first end to the second end, and at least one impact detector 104 embedded within the modular busbar 100 which is configured for detecting a vehicle rollover, a mechanical impact, and/or damage to the modular busbar 100.

The modular busbar 100 has an overall length L extending from a first end to a second end. The modular busbar 100 may be in the form of a cable, in other words, such that the at least two conductors 102 are provided with an insulating covering, and the respective components of the modular busbar 100 are embedded within the insulating covering. However, in a preferred embodiment, the modular busbar 100 may be provided with an outer housing 101 which provides protection for the components of the modular busbar 100. In the context of the present disclosure, an "outer housing" herein differs form a mere insulating covering in that an "outer housing" has additional functions than just providing electrical isolation of the at least two conductors 102.

In the context of the present disclosure, the term "embedded within", when referring to components of the modular busbar 100, refers to a position in which the respective component is provided in the modular busbar 100 such that the respective component is not exposed to an external load acting directly on said component. In other words, the respective component is provided within the modular busbar 100 such that some form of protection is provided to the component from external loads. As an example, a component which is moulded into an encapsulating material, or a component which is placed into an internal volume of an encapsulating material, would be protected from external loads acting directly thereon by the encapsulating material. Further, the term "embedded within" is not so limiting as meaning that the respective component is completely surrounded on all sides by an encapsulating material. For example, the ends of a conductor which is "embedded within" a modular busbar may be exposed so that the requisite connections to further busbars may be facilitated.

According to an embodiment, which may be combined with other embodiments described herein, the modular busbar 100 may further comprise an outer housing 101 extending from the first end to the second end, wherein the outer housing 101 is configured for protecting the at least two conductors 102 from vehicle rollover, mechanical impact, water ingress and/or damage to the modular busbar 100. Particularly, the outer housing 101 preferably provides a sealed enclosure for the components of the modular busbar 100 housed within, such that said enclosure is provided with a sufficient level of structural rigidity to protect the components housed within from external loads which may commonly occur in a vehicle parking area. Such an outer housing 101 allows the internal components of the busbar 100, such as the conductors 102 and communication means 105, to be reliably protected from damage.

Further, by providing sufficient structural rigidity, the outer housing 101 may reduce installation effort by providing a relatively rigid unitary component which can be easily transported, lifted and moved into position prior to final installation and, when used in an installation which requires a span between two objects, may further provide sufficient structural rigidity to support itself across the span.

The outer housing 101 may be arranged so that a sealed volume is provided within the outer housing 101 by the provision of end walls on the first end and the second end of the modular busbar 100. Accordingly, the end walls may be provided with openings, through which the electrical connectors 103 at each end of the at least two conductors 102 may pass through, so that the modular busbar 100 may be connected to another element. This arrangement provides increased protection from water ingress, as additional work during installation is not required to maintain a sealed volume in each respective modular busbar 100.

Alternatively, the outer housing 101 may be arranged so that the outer housing 101 forms a portion of a sealed volume which, when the respective modular busbar 100 is attached to a neighbouring modular busbar 100, forms a sealed volume which is shared across multiple busbars 100. Accordingly, each end of the outer housing 101 may include a joining section which is shaped to join and seal with a respective joining section of another element or another modular busbar 100. Alternatively, the respective outer housings 101 of modular busbars 100 may be adhered together to form a shared sealed volume.

The outer housing 101 may be further provided with internal features for providing additional mechanical strength, for providing separated compartments within the sealed volume, or to provide additional sealed volumes within the outer housing 101. For example, the outer housing 101 may be configured to form a shared sealed volume with other modular busbars 100, but may further include sealed compartments within each respective modular busbar 100 which is not shared with other modular busbars 100. The further sealed compartments may provide additional protection from water ingress for components of the modular busbar 100 such as the impact detectors, particularly if said impact detectors include electrical components such as a controller or transmitter which is configured to output a signal over the at least one communications line 105.

The outer housing 101 may preferably be a polymeric material which has the advantages of being lightweight, low cost and sufficiently rigid. Optionally, the outer housing 101 may include a rigid outer shell which provides structural rigidity, and a filling material therein to fill the space between the outer shell and the components within. For example, the outer housing 101 may include a polymeric outer shell which is filled with a lightweight foam or honeycomb material. Alternatively, the outer housing 101 may be manufactured from a metallic material, for example aluminium, may include concrete, or may include a combination thereof, depending on the intended installation location. Further alternatives include layered constructions comprising a polymeric inner shell and a metallic outer shell, or a metallic lower shell which couples with a polymeric upper shell. For example, a modular busbar which is intended to be installed in a speedbump configuration may include an outer housing 101 which is manufactured from concrete reinforced with metallic elements, or which is manufactured from a polymeric material with a metallic outer shell provided thereon. As yet a further alternative, the outer housing 101 may include optional components or layers which may be installed on selected modular busbars 100, such as a metallic outer shell which is only installed on modular busbars 100 which may be installed in positions which are particularly vulnerable to impacts. As yet a further alternative, the modular busbar 100 may be installed having an outer housing 101 which is then covered with concrete after installation.

The modular busbar 100 includes at least two conductors 102 which extend from the first end to the second end. The conductors 102 are provided for transmitting the main charging current for charging electric vehicles, and may be configured for transmitting AC or DC current. The conductors 102 may include any suitable conductors in the state of the art suitable for transmitting the required current levels. To achieve the desired current capacity, the at least two conductors 102 may include multiple conductors 102, for example four, six or eight conductors, installed parallel to each other within the modular busbar 100 and extending from the first end to the second end. The at least two conductors 102 may be flexible conductors or rigid conductors. However, in a preferred embodiment, the at least two conductors 102 may include a rigid metallic conductor which may transmit current with low resistance and minimal loss, and which may provide additional structural rigidity to the modular busbar. However, the present disclosure is not limited thereto, and the at least two conductors 102 may include solid or stranded wire or cable conductors, and/or may include one or more insulating layers. The material of the at least two conductors 102 may include copper for high conductivity and low loss, however the preferred material for the at least two conductors 102 may include aluminium for lighter weight and lower cost or any other kind of metallic conducting material.

The at least two conductors 102 may be arranged in any arrangement within the modular busbar 100. However, it is preferable arrange the at least two conductors 102 in a position within the modular busbar 100 which provides sufficient mechanical protection. For example, in a ground-based modular busbar 100, the at least two conductors may be positioned in a lower position in the modular busbar 100 so that the outer housing 101 may be thicker and more protective above the at least two conductors 102.

As a further example, the at least two conductors may be arranged concentric to one another. For example, a first conductor 102 may have a tube-like shape, and a second conductor 102 may be provided within the first conductor 102. Such an arrangement may provide improvements to electrical shielding of the conductors, and may further provide a sealed passage through which a cooling medium may flow, such as a cooling liquid or cooling air.

The modular busbar further includes an electrical connector 103 provided at each respective end of the at least two conductors 102, which are provided for connecting the at least two conductors 102 of a first modular busbar to the at least two conductors 102 of a second modular busbar, to a modular charging element, to an electric vehicle supply equipment (EVSE) apparatus, or to any other modular component.

Particularly, each conductor 102 of the modular busbar 100 may be provided with a first electrical connector 103 on the first end, and a second electrical connector 103 on the second end. Preferably, the first electrical connector 103 of one modular busbar 100 may be shaped to interconnect with the second electrical connector 103 of a neighbouring modular busbar 100. For example, the first electrical connector 103 may be a "male" connector and the second electrical connector 103 may be a corresponding "female" connector. Further thereto, the respective connectors on a first conductor 102 within a modular busbar 100 may be arranged opposite to the respective connectors on a second conductor 102 within the same modular busbar 100, such that on one end of the modular busbar 100, a "male" connector and a "female" connector are provided for symmetry between the first end and the second end, and so that a neighbouring modular busbar 100 may be attached in either orientation, i.e. to either the first end or the second end of the neighbouring modular busbar 100.

It is preferable that the electrical connector 103 provides a low-resistance and low-loss connection between each respective conductor 102. According to an embodiment, which may be combined with other embodiments described herein, the electrical connector 103 includes at least one selected from the group comprising a solder connection, a plug and socket connection, a screwed connection, and a bolted connection.

According to one preferable embodiment, the electrical connector 103 may be a screwed connection. In the case of a screwed connection, the electrical connector 103 on the first end of a conductor 102 may include a through hole, and the electrical connector 103 on the second end of a conductor 102 may include a threaded hole, so that a screw may be inserted during installation to securely connect the two conductors 102. The respective conductors may be arranged to simply overlap, or alternatively, the screwed connection may have corresponding half-lap features so that the respective conductors attach at the same level. Such a screwed connection provides a sufficiently low-resistance connection, while further improving installation efficiency as the electrical connection between neighboring modular busbars 100 and between modular busbars 100 and other components may be quickly and easily carried out on-site with basic tools. Further, a screwed connection allows for later disassembly should a modular busbar 100 need replacing. Additional advantages include allowing dissimilar materials to be attached together, such as an aluminium conductor of a modular busbar 100 being screwed to a steel terminal.

According to another preferable embodiment, the electrical connector 103 may be a solder connection. In the case of a solder connection, the respective conductor 102 is soldered to a further conductor during installation of the modular busbar. A solder connection may provide very low resistance and low losses, particularly compared to a plug-and-socket or a bolted connection, but may have a minor increase in installation effort and may increase difficulty in removing and replacing a modular busbar.

In the case of a bolted connection, the installation effort is decreased and a relatively low-loss connection is achieved, while also allowing for the modular busbar to be disassembled for replacement or repair. By comparison, a plug and socket connection has the advantage of reduced installation effort at the expense of a minor increase in resistance across the connection. Alternatively, the electrical connector 103 may include one of a bolted connection or a plug and socket connection for low installation effort.

As a further alternative, the electrical connectors 103 may be provided as plug-and-socket connections, screwed connections or bolted connections an may be additionally soldered after installation to reduce resistance and losses. The additional soldering may be carried out according to a typical soldering process, or may be carried out by providing a high soldering current to the assembled busbar, which may be in excess of a typical operation current, so that the electrical connectors 103 are fused through resistance welding.

The modular busbar 100 further includes at least one communication line 105 which, similar to the at least two conductors 102, extend from the first end to the second end of the modular busbar 100. The at least one communication line 105 allows for components which are attached to the modular busbar 100 to communicate with each other, for example, for controlling and managing the selective charging of a plurality of electric vehicles. The at least one communications line 105 may include a multi-core cable suitable for transmitting the preferred communications protocol to be implemented in the installed system. The at least one communications line 105 may preferably be a communications bus, for example, a CAN-Bus or LIN-Bus. The at least one communications line 105 allows for the modular busbar 100 to transmit communication signals between components attached to the modular busbar or, in other words, allows for signals which do not correspond to the charging current to be transmitted across the modular busbar 100.

The at least one communications line 105 may further include a communications connector at each respective end of the at least one communications line 105. For example, a multi-pin connector may be provided at each of the first end and the second end of the communications line 105, and may be attached during installation to a corresponding multi-pin connector of a further communications line 105 in a further modular component. However, the present disclosure is not limited thereto, and the at least one communications line 105 may be a single line which is shared across multiple modular busbars which is, for example, pulled through a channel in the modular busbar during installation so as to minimize the number of connections and improve reliability.

The modular busbar 100 according to the present disclosure further includes at least one impact detector 104 which is configured for detecting an impact with, or damage to, the modular busbar 100. In its intended installation location in an electric vehicle charging area, the modular busbar 100 may be subject to external loads such as vehicle impacts, vehicle rollovers, fallen trees, or by placing or dropping heavy objects to be loaded into a vehicle. In most situations, the internal components of the modular busbar such as the at least two conductors 102 and the at least one communications line 105 may be sufficiently protected by an outer housing 101. However, in situations where larger external loads are applied, damage to the conductors 102 or the communications line 105 may occur, which may pose a safety problem.

The at least one impact detector 104 may include, for example, a pair of conductors or a pair of conductive shells or sheets arranged parallel to each other with a gap therebetween, such that contact is made between each of the conductors when a sufficient external load is applied. Alternatively, the at least one impact detector 104 may include a closed loop conductor which allows for the generation of an impact signal when the loop is broken. As yet another alternative, the at least one impact detector 104 may include an optical fibre which allows for the detection of a deflection or deformation of the modular busbar 100. Yet another alternative may include one or more contact microphones attached to a surface of the outer housing 101, so that the contact microphones may detect an impact. However, the present disclosure is not limited thereto, and any suitable impact detector known in the state of the art may be implemented. Optionally, the at least one impact detector 104 may include a plurality of different impact detector embedded within the same modular busbar 100.

The at least one impact detector 104 may further include additional electrical or electronic components. Certain impact sensors in the state of the art may be in the form of an electronic sensor which includes additional components. For example, the at least one impact detector 104 may include a controller or transmitter configured for generating a signal when an impact is detected. In particular, when the at least one impact detector 104 is configured to transmit a signal across the at least one communications line 105, the transmitter may be configured to generate the requisite bus signals.

According to an embodiment, which may be combined with other embodiments described herein, the at least one impact detector 104 may be configured to generate a signal for de-energizing the at least two conductors when a vehicle rollover, a vehicle impact and/or damage to the outer housing 101 is detected. The signal may be provided to an electric vehicle supply equipment (EVSE) apparatus attached to the system of modular busbars which, upon receipt of the signal, is configured to de-energize the modular busbars under certain circumstances. Alternatively, the electric vehicle charging area in which the modular busbars are installed may further include at least one switch, which could be installed at key positions to de-energize one busbar, a string of busbars, or a whole branch of busbars of the electric vehicle charging area. Such an arrangement allows for de-energizing of select sections of the electric vehicle charging area, in particular a failed or failing segment of the electric vehicle charging area, and ensures continued operation of the charging area in other segments.

The signal may include an indication of the severity of the external load, and the de-energizing may be carried out based on the severity. For example, for a simple vehicle rollover detected by the at least one impact detector 104 may cause the at least two conductors 102 to be de-energized for a short time before being re-energized. However, for a more severe impact, or when damage is detected, the at least one impact detector 104 may cause the at least two conductors 102 to be de-energized permanently, until service or repair can be carried out.

The at least one impact detector 104 may extend the full length L of the modular busbar 100 from the first end to the second end such that the at least one impact detector 104 may be connected to a respective impact detector 104 in another busbar. Accordingly, the at least one impact detector 104 may provide the signal for de-energizing the at least two conductors 102 to an attached electric vehicle supply equipment (EVSE) apparatus by directly connecting thereto. Alternatively, the at least one impact detector 104 may not extend past the length of the modular busbar 100, and may instead be configured to generate a signal for de-energizing the at least two conductors 102 by transmitting said signal along the at least one communications line 105, which minimizes the number of connections required between adjacent modular busbars 100.

The modular busbar 100 according to the present disclosure may further include at least one fixture for fixing the modular busbar 100 into place during installation. For example, the modular busbar 100 may be fixed to a horizontal or vertical surface with a plurality of expanding anchor bolts, expanding bolts, stakes or pins, with an adhesive, or with a bed of concrete. Alternatively, the fixture could include a fixing bracket which is attached to the installation surface, and the modular busbar 100 is mounted to the fixing bracket. However, the present disclosure is not limited thereto, and any suitable fixture known in the state of the art may be used. The fixture may be supplied pre-attached to the modular busbar 100 to improve installation efficiency.

The at least one fixture may further include a spacer which is configured to arrange the modular busbar at a distance away from the surface to which it is attached. For example, the at least one fixture may be configured to install the modular busbar at a height above a ground surface so that if heavy rainfall causes rising water to accumulate, the modular busbar 100 would not be susceptible to being submerged, and the modular busbar 100 would further allow water to flow underneath.

The overall length L of the modular busbar 100 may be configured to be one or more standard lengths suitable for installation into a parking area. According to an embodiment, which may be combined with the embodiments described herein, the modular busbar 100 is suitable for installation in an electric vehicle charging area comprising a plurality of charging spots, and wherein a length L of the modular busbar 100 corresponds to the width of a charging spot. Typically, parking areas have a common width of parking spots on which vehicles may be parked. Accordingly, the length L of the modular busbar 100 may be of a standard length which corresponds to the width of a parking spot, so that installation of the charging infrastructure is simplified. For example, a standard parking spot may have an allocated size of 5 m long and 2.3 m wide. However, there are many "standard" parking spot sizes depending on the region in which the charging area is to be provided, and other parking spot configurations such as angled parking or parallel parking may be implemented.

The modular busbar may have a length L corresponding approximately to the width of a parking spot, for suitability to 90 degree parking areas. Alternatively, the modular busbar may have a length L corresponding approximately to the length of a parking spot, for suitability to parallel parking areas. Particularly, the modular busbar 100 may have a length L from the first end to the second end of at least 2 m, more particularly at least 2.2 m. Further, the modular busbar may have a length L from the first end to the second end of at most 6 m, more particularly at most 5 m. Additional standard lengths may be provided depending on the application. For example, for traversing the width of a driving lane where vehicles typically travel, a modular busbar 100 may be provided in a speedbump configuration having a length L corresponding to the width of the driving lane. Providing one or more standard lengths of the modular busbar 100 reduces cost and installation effort.

The modular busbar 100 as exemplarily shown in the figures has a substantially linear form such that the at least two conductors 102 and the at least one communications line 105 extends along the linear form from a first end to the second end. However, the present disclosure is not limited thereto, and the shape of the modular busbar 100 is not restricted only to a linear type. The modular busbar 100 may include other forms, such as a curved form where the modular busbar 100 extends along a curve, a corner form where the modular busbar 100 has the form of an L-shape, a splitting form where the modular busbar 100 has a T-form or Y-form or a crossing form where the modular busbar has an X-form. For example, a modular busbar 100 may include a corner busbar configured for connecting two modular busbars 100 at an angle.

The modular busbar 100 according to the present disclosure may have multiple different forms depending on the application and installation position. Figs. 2a-2c show three examples of different types of modular busbars 100a, 100b, 100c, shown as cross-sectional views through cross-section A-A of Fig. 1.

According to an embodiment, which may be combined with other embodiments described herein, the modular busbar 100a, 100c may be configured for being mounted to a horizontal surface, such that the outer housing 101 is configured for protecting the at least two conductors 102 from vehicle rollover, mechanical impacts or water ingress. Examples of modular busbars according to this embodiment are shown in Figs. 2a and 2c.

According to a further embodiment, which may be combined with other embodiments described herein, the modular busbar 100a may be configured for being mounted to a vertical surface or for spanning between two objects, such that the outer housing 101 is configured for protecting the at least two conductors from impacts such as vehicle impacts or other mechanical impacts.

The exemplary modular busbar 100a shown in Fig. 2a may be configured for installation to a flat surface, for example a flat horizontal surface or a flat vertical surface. The outer housing 101 is exemplarily shown as a semi-circular shape which provides protection on a top side of the modular busbar 100a (when installed to a horizontal surface). Since it is more likely for an impact to occur on the top side of the modular busbar 100a, the impact detectors 104 are provided at a top side of the modular busbar 100a above the conductors 102 for detecting a top impact. For attaching the exemplary modular busbar 100a to the horizontal or vertical surface, the modular busbar 100a may include a fixture 106.

The exemplary modular busbar 100b shown in Fig. 2b may be configured for spanning between two objects. For example, the exemplary modular busbar 100b could be installed such that it connects two charging poles at a prescribed height from the ground, such that the distance between the two charging poles is spanned by the modular busbar 100b. In this type of installation, there is a chance of an impact to occur on all sides of the modular busbar 100b, such as impacts from taller vehicles such as trucks or vans, or impacts from falling trees. Further, the modular busbar 100b is required to have sufficient structural rigidity to support itself across the span, and the modular busbar 100b is required to be sealed from weather on all sides. Consequently, the exemplary modular busbar 100b has an outer housing 101 having a fully circular cross-section, and impact detectors 104 are arranged around the conductors 102 for detecting a top, bottom or side impact.

The exemplary modular busbar 100c shown in Fig. 2c may have a speedbump shape which is configured to be installed across a driving lane where vehicles may travel. The speedbump shape is similar to the exemplary modular busbar 100a of Fig. 2a, but the exemplary outer housing 101 has a flatter profile for being traversed by a vehicle. A module busbar 100c having a speedbump configuration may be more susceptible to damage, for example, from being traversed by an excessively heavy vehicle. Consequently, the exemplary modular busbar 100c may include a higher number of impact detectors 104 arranged at more positions in the modular busbar 100c. Further, the speedbump configuration of the modular busbar 100c may have an increased number of fixtures 106 for fixing the modular busbar 100c to the road.

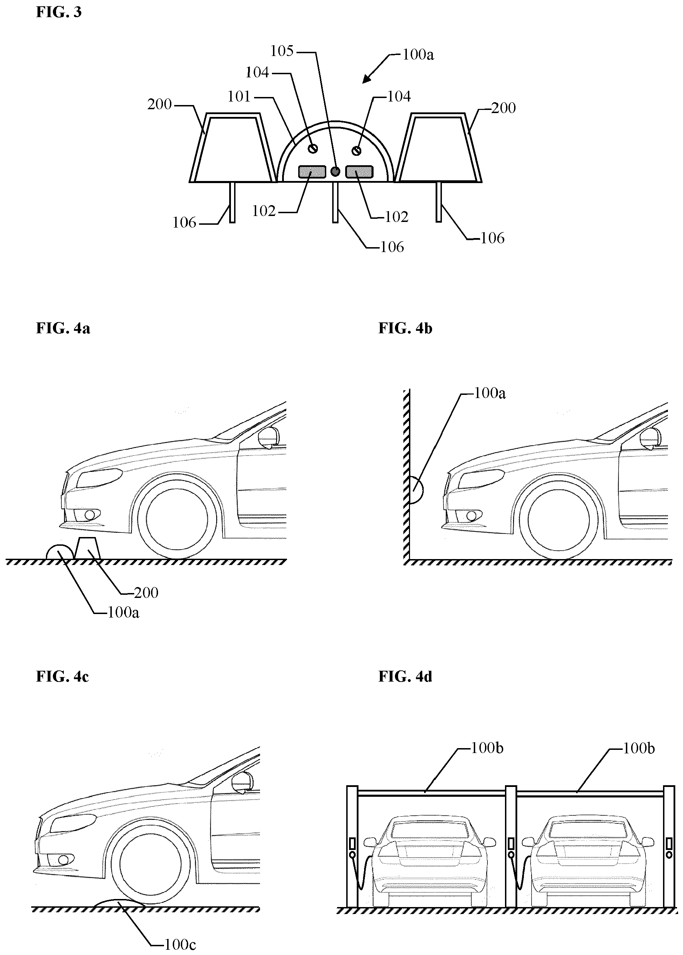

Reference will now be made to Fig. 3, which shows an exemplary modular busbar 100a which is further provided with a stop bumper 200. According to an embodiment, which may be combined with other embodiments described herein, the modular busbar 100 of the present disclosure may be further provided with at least one stop bumper arranged parallel to the outer housing 101, wherein the at least one stop bumper is configured for preventing a vehicle rollover.

In the context of the present disclosure, the term "parallel" when referring to the relative position of elements in a modular busbar means that two or more elements of the modular busbar are arranged substantially parallel to each other along a whole or a portion of their respective longitudinal lengths. The term "parallel" is to be interpreted as "substantially parallel", such that the relative positions of the elements are not limited to absolute parallelism, but may diverge from absolute parallelism by a reasonable amount. In the case of a modular busbar 100a being provided with at least one stop bumper 200, a longitudinal axis of the modular busbar 100a extending from the first end to the second end may be substantially parallel to the longitudinal axis of the at least one stop bumper 200, such that the angle between the respective axes ranges from 0 degrees (absolute parallelism) to 10 degrees (substantial parallelism). Further, in the case where the modular busbar 100a does not have a linear shape and has, for example, a curved shape, the at least one stop bar 200 may have a similar curved shape which follows the curved shape of the modular busbar 100a so that the respective curved shapes are substantially parallel to one another.

As exemplarily shown in Fig. 3, the modular busbar 100a is provided with two stop bumpers 200 arranged on either side of the modular busbar 100a. Such an arrangement may be suitable for providing a modular busbar which runs between two parking spots, such that a vehicle rollover can be prevented from both sides of the modular busbar 100a. However, the present disclosure is not limited thereto, and the modular busbar 100a may be provided with a stop bumper 200 on only one side.

The stop bumper 200 may have the form of a conventional stop bumper made of reinforced concrete, however the present disclosure is not limited thereto. For example, the stop bumper 200 may be manufactured in a similar way as the outer housing 101 of the modular busbar 100a. The stop bumper 200 may be made from a polymeric material which has the advantages of being lightweight, low cost and sufficiently rigid. Optionally, the stop bumper 200 may include a rigid outer shell which provides structural rigidity, and a filling material therein to fill the space within the outer shell. For example, the stop bumper 200 may include a polymeric outer shell which is filled with a lightweight foam or honeycomb material. Alternatively, the stop bumper 200 may be manufactured from a metallic material, for example aluminium, may include concrete, or may include a combination thereof. The stop bumper 200 and the modular busbar 100a may be manufactured in a combined unit, for example, such that the outer housing 101 of the modular busbar 100a and the stop bumper 200 are made from a single part. A combined unit comprising the modular busbar 100a and one or two stop bumpers 200 may further improve ease of installation.

Reference will now be made to Figs. 4a-4d, which illustrate exemplary installations of a modular busbar according to aspects and embodiments of the present disclosure.

Fig. 4a exemplarily shows providing the modular busbar 100a shown in Fig. 2a mounted on a horizontal surface. In a preferred embodiment, the horizontal surface is a ground surface of a parking area, however the modular busbar 100a may be installed on other horizontal surfaces such as a top surface of a support beam or a horizontal ceiling surface of a multi-level parking area. Such an installation position of the modular busbar 100a would typically be suitable for an outdoor parking area, but would also be applicable to indoor and multi-level parking areas.

Although the outer housing 101 of the modular busbar 100a provides additional protection from water ingress, vehicle impacts and other mechanical impacts, the modular busbar 100a may optionally be provided with a stop bumper 200 for preventing vehicle rollover.

Fig. 4b exemplarily shows providing the modular busbar 100a shown in Fig. 2a mounted on a vertical surface. The vertical surface may be, for example, a wall surface of a parking area, a supporting column of a multi-level parking area, or a side surface of an overhead beam. The modular busbar 100a may be mounted horizontally on the vertical surface for extending the charging system lengthways across the parking area, or vertically on the vertical surface for extending the charging system to another level of a multi-level parking area. Particularly, the vertical surface installation position of the modular busbar 100a is suitable for an indoor parking area or multi-level parking area. When mounted to a vertical surface, the modular busbar 100a is safe from vehicle rollover. However, water ingress, vehicle impacts or other mechanical impacts may still occur, and the outer housing 101 of the modular busbar 100a provides protection from such aspects.

Fig. 4c exemplarily shows providing the modular busbar 100a shown in Fig. 2c mounted on a horizontal surface in a speedbump configuration, particularly on a ground surface of a parking area across a lane where vehicles typically travel. Such an installation position of the modular busbar 100c may be suitable for indoor or outdoor parking areas. The outer housing 101 of the modular busbar 100c provides protection for the internal components during vehicle rollovers, in addition to other mechanical impacts and water ingress.

Fig. 4d exemplarily shows providing the modular busbar 100b shown in Fig. 2b for spanning between two objects, particularly between two charging poles. Such an installation may be particularly desirable for retrofitting or upgrading existing electric vehicle infrastructure by connecting existing charging poles with newer technology or for increasing charging capacity.

Alternatively, the modular busbar 100b may be provided for spanning across a lane where vehicles typically travel, as an alternative to the speedbump configuration. When mounted to span a distance between two objects, the modular busbar 100b is safe from vehicle rollover.

However, water ingress, vehicle impacts or other mechanical impacts may still occur, and the outer housing 101 of the modular busbar 100b provides protection from such aspects.

The charging of electric vehicles may require the transmission of significant levels of current, which may generate heat in the at least two conductors 102 of a modular busbar 100. The modular busbar 100 of the present disclosure may be further provided with a thermal management solution for managing the heat generated by the at least two conductors 102. According to an embodiment, which may be combined with other embodiments described herein, the modular busbar 100 further includes a thermal management element configured for thermal management of the at least two conductors 102.

The thermal management element may be provided in multiple forms. Particularly, the at least one cooling passage may be a cooling passage for cooling the at least two conductors 102 with a cooling liquid or gas. The cooling passage may circulate a cooling liquid such as water through the modular busbar 100, or may alternatively circulate cooling air. The at least one cooling passage may extend the length L of the modular busbar 100 and may be configured to be attached to a cooling system. The cooling system may include a pump for pumping a cooling liquid through the at least one cooling passage, or may include a fan for blowing cooling air through the at least one cooling passage. The cooling system may be included in an electric vehicle supply equipment (EVSE) apparatus attached to the modular busbar 100.

The thermal management element may be in the form of an isolating material for thermally isolating the at least two conductors 102. Particularly, the isolating material may isolate the heat generated by the at least two conductors 102 from other components or from the outer housing 101 of the modular busbar 100. For example, if an impact detector 104 includes a controller, the nearby conductors 102 may be provided with an isolation material to isolate the heat of the conductors 102 from the controller.

The thermal management element may be in the form of a conduction element which transfers or dissipates heat from the at least two conductors 102 by thermal conduction. Particularly, the thermal management element may include a heat sink, for example a heat sink attached to the conductors 102, for dissipating heat away from the conductors 102. Alternatively, the thermal management element may include a heat pipe for transferring heat away from the at least two conductors 102, so that the heat may be dissipated elsewhere.

A second aspect of the present disclosure describes a modular charging element and embodiments thereof. The modular charging element according to the present disclosure is configured for attaching to the modular busbar of the first aspect, and is provided for connecting electric vehicles to a charging network via a charging connection. According to the second aspect, a modular charging element 300a, 300b, 300c configured for attaching to the modular busbar 100, 100a, 100b, 100c according to the first aspect is provided, the modular charging element 300a, 300b, 300c including at least one charging connection 301 for connecting at least one electric vehicle to the modular busbar 100, 100a, 100b, 100c, at least two electrical connectors configured for electrically attaching to the respective electrical connectors 103 of the modular busbar 100, 100a, 100b, 100c, and at least one communications connector configured for attaching to the at least one communications line 105 of the modular busbar 100, 100a, 100b, 100c, wherein the charging connection 301 is attachable to the at least two conductors 102 via the at least two electrical connectors and to the at least one communications line 105 via the at least one communications connector.

The charging connection 301 of the modular charging element 300a, 300b, 300c is attached to the at least two conductors 102 of the modular busbar 100, 100a, 100b, 100c via respective electrical connectors so that the charging connection 301 provides an electrical connection between an electric vehicle and the modular busbar 100 for supplying charging current to the electric vehicle. Further, the charging connection 301 of the modular charging element 300a, 300b, 300c is attached to the at least one communications line 105 via a respective communications connector so that the charging connection 301 provides a communications connection between the electric vehicle and the modular busbar 100, 100a, 100b, 100c for allowing the electric vehicle to communicate with and/or be controlled by an electric vehicle supply equipment (EVSE) apparatus attached to the charging network.

The modular charging element 300a, 300b, 300c may attach to the modular busbar 100, 100a, 100b, 100c in any modular fashion. For example, the at least two electrical connectors of the modular charging element 300a, 300b, 300c may include terminals or cables which are attached to the modular busbar 100, 100a, 100b, 100c during installation. Particularly, the at least two electrical connectors of the modular charging element 300a, 300b, 300c are configured in the same way as the at least two electrical connectors 103 of the modular busbar 100, 100a, 100b, 100c so that the respective elements may be interconnected.

Further, the modular charging element 300a, 300b, 300c may be configured to join modular busbars 100, 100a, 100b, 100c together. According to an embodiment, which may be combined with other embodiments described herein, the modular charging element 300a, 300b, 300c may further include at least two passthrough conductors 305 and at least one passthrough communications line 306, wherein the modular charging element 300a, 300b, 300c is suitable for attaching between two modular busbars 100, 100a, 100b, 100c. By providing passthrough connections for components of the modular busbar 100, 100a, 100b, 100c, assembly of the modular components is further simplified, reducing installation effort and cost.

Optionally, the modular charging element 300a, 300b, 300c may further include at least one passthrough impact detector. For example, the modular busbar 100, 100a, 100b, 100c may include at least one impact detector 104 which is configured for being connected to a further impact detector 104 in other busbars. Such a passthrough impact detector may further provide impact detection functionality for the modular charging element 300a, 300b, 300c for improved safety and reliability.

For enabling additional control, charging scheduling of multiple electric vehicles, and enhanced safety, the modular charging element 300a, 300b, 300c may further include a switching element 303. According to an embodiment, which may be combined with other embodiments described herein, the at least one switching element 303 is configured for energizing or de-energizing the charging connection 301 in response to a signal provided on the at least one communications line 105.

The switching element 303 may be configured for selectively energizing or de-energizing the charging connection 301 in order to, for example, be controlled to start or stop charging at a specific charging spot. A charging control system, which may be included in an electric vehicle supply equipment (EVSE) apparatus connected to the modular busbars 100, 100a, 100b, 100c and to the modular charging element 300a, 300b, 300c, may control the switching element 303 based on a charging load strategy, a charging schedule, etc. Accordingly, by including a controllable switching element 303 in the modular charging element 300a, 300b, 300c, a scheduled charging programme may be implemented for managing the charging of a plurality of electric vehicles.

The modular charging element 300a, 300b, 300c may be provided with at least one sensor for detecting critical parameters at the points where electric vehicles are attached to the charging system. The at least one sensor may include a power or current sensor for sensing charging loads, load fluctuations, overload conditions and other electrical parameters during charge operations. The at least one sensor may include a temperature sensor for sensing a temperature of the modular charging element 300a, 300b, 300c. The at least one sensor may include a connection sensor which is configured for sensing whether a charging connection 301 is connected to an electric vehicle or not. Further, the at least one sensor may be attached to the at least one communications line 105 of the modular busbars 100, 100a, 100b, 100c via the communications connector so that the respective parameters may be transmitted over the communications line 105.

Further, the switching element 303 may be configured to be de-energized in response to a signal generated by the at least one impact detector 104 in a modular busbar 100, 100a, 100b, 100c connected to the modular charging element 300a, 300b, 300c. For example, a signal generated by the at least one impact detector 104 may be communicated across the at least one communications line 105. By operating the switching element 303 in response to an impact, an electric vehicle attached to the modular charging element 300a, 300b, 300c may be isolated from the charging network in the situation where a severe impact or damage has occurred to a component, particularly a modular busbar 100, 100a, 100b, 100c, attached to the charging network, which further increases the safety of the charging network.

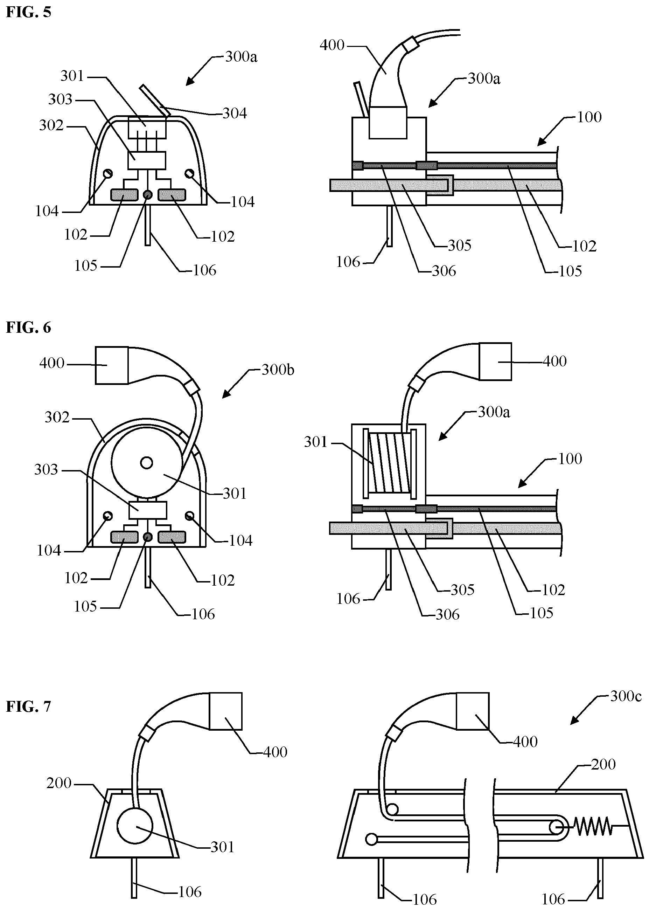

Embodiments of the modular charging element according to the present disclosure may have different forms which provide flexible solutions for providing charging points for electric vehicles when combined with modular busbars of the present disclosure. Reference will be made to Figs. 5, 6 and 7 which illustrate three exemplary modular charging elements according to embodiments described herein.

The modular charging element 300a, 300b, 300c may further include a unique identification which is assigned to that specific modular charging element 300a, 300b, 300c. In a charging system with a plurality of charging spots, the unique identification allows a user to interact with the charging system for controlling or instructing the charging system to charge the electric vehicle attached thereto. For example, the modular charging element 300a, 300b, 300c may have a unique identification number, a barcode or a QR code which identifies the modular charging element 300a, 300b, 300c on the charging system. Alternatively, the modular charging element 300a, 300b, 300c may include a wireless identification means, for example, by including radio frequency identification (RFID) or near field communication (NFC) capabilities. The user may enter the identification number or scan the barcode, QR code, RFID or NFC into a smartphone app to select charging profiles, select a charging priority, or control other aspects of the electric vehicle charging.

Fig. 5 illustrates an exemplary socket-type modular charging element 300a suitable for attaching to a modular busbar 100 according to the present disclosure. According to an embodiment, which may be combined with embodiments described herein, a modular charging element 300a is provided, having a charging connection 301 in the form of a socket 301 to which a charging cable can be connected between the modular charging element 300a and the electric vehicle. The socket 301 provides a plurality of terminals which are connected to the at least two conductors 102 and the at least one communications line 105, so that the electric vehicle is electrically connected to the charging current and further connected to the communications network of the charging system.

The modular charging element 300a may include a housing 302 which houses the internal components of the modular charging element 300a. The housing 302 may have a similar construction and be made of similar materials as the modular busbar 100, 100a, 100b, 100c to which it is designed to be attached. For example, the housing 302 may be made from a polymeric material or a metallic material. The housing 302 is shown as being a low, ground-level unit similar in shape to the modular busbar 100, 100a, 100b, 100c to which it attaches, with a socket 301 facing upwards, sideways or downwards for connection to a charging plug 400. However, the present disclosure is not limited thereto, and the housing 302 may alternatively have the shape of a charging post with the socket 301 attached to the side of the charging post. In the case of the modular charging element being in the form of a charging post, the modular charging element 300a, 300b, 300c may be mounted to a ground surface, a wall surface or a ceiling surface depending on the positioning of the modular busbar system.

The modular charging element 300a may further include a socket cover 304. The socket cover 304 may include any suitable cover known in the state of the art, for example, a spring-loaded flap design, a shutter design or a cap design. The socket cover 304 covers the socket 301 when a charging plug 400 is not connected thereto, so that the socket 301 is protected from water ingress, adverse weather, humidity or foreign material ingress.

Fig. 6 illustrates an exemplary retractable-type modular charging element 300b suitable for attaching to a modular busbar 100, 100a, 100b, 100c according to the present disclosure. According to an embodiment, which may be combined with other embodiments described herein, a modular charging element 300b having a housing 302 is provided, having a charging connection 301 in the form of a retractable charging cable 301 which is stored within the housing 302. Providing a retractable cable which is stored within the housing 302 of the modular charging element 300b provides additional protection for the charging cable from the weather or from external damage when the charging cable is not in use.

The housing 302 may have a similar construction and be made of similar materials as the modular busbar 100, 100a, 100b, 100c to which it is designed to be attached. For example, the housing 302 may be made from a polymeric material or a metallic material. The housing 302 is shown as being a low, ground-level module similar in shape to the modular busbar 100, 100a, 100b, 100c to which it attaches, with an opening for the integrated retractable charging cable 301 to pass through to a charging plug 400. However, the present disclosure is not limited thereto, and the housing 302 may alternatively have the shape of a charging post with the retractable charging cable 301 mounted within the charging post. The modular charging element 100b may alternatively be mounted on a ceiling or a wall, depending on the mounting location of the busbars to which it is attached.

Fig. 7 illustrates an exemplary retractable-type modular charging element 300c suitable for attaching to a modular busbar 100,100a, 100b, 100c which is in the form of a stop bumper. The stop bumper may be the same stop bumper 200 as integrated within a modular busbar, or may be provided as additional part ready to be attached to the modular busbar. As discussed above, a modular busbar according to the present disclosure may be further provided with a stop bumper 200 for preventing a vehicle rollover. The stop bumper 200 may be further configured for housing a retractable charging cable, so that the stop bumper 200 forms a modular charging element 300c. According to an embodiment, which may be combined with other embodiments described herein, the housing 302 of the modular charging element 300c may be in the form of a stop bumper 200 which extends parallel to the modular busbar 100, 100a, and the retractable cable 301 is stored within the stop bumper 200. As with the other modular charging elements described herein, the stop bumper type charging element may be attached to a ground surface, a wall surface or a ceiling. Further, although the preferred embodiment is for the stop bumper type charging element 300c to be installed parallel to a modular busbar, the present disclosure is not limited thereto, and the stop bumper type charging element 300c may be arranged differently. For example, the stop bumper type charging element 300c may be arranged perpendicular to a modular busbar 100, so that the modular charging element is provided between parking spots.

As exemplarily shown in the figure, in the case of a retractable cable 301 being housed within a stop bumper 200, the cable may be configured to extend within the length of the stop bumper 200 with a retracting mechanism, such as a spring-mounted pulley which retracts the cable within the stop bumper 200.

Modular charging elements 300a and 300b are configured to be mounted to either a horizontal surface, particularly to a ground surface of a parking area or a ceiling surface of a parking area, or a vertical surface, particularly to a wall surface of a parking area or a support beam/column of a parking area. To this effect, the modular charging element 300a may further include a fixture 106 for mounting the modular charging element 300a, 300b in the same fashion as for the modular busbar 100, 100a, 100b, 100c described above. Further, modular charging element 300c is configured to be mounted to a horizontal surface, particularly to a ground surface or a ceiling surface of a parking area. To this effect, the modular charging element 300a may further include at least one fixture 106 for mounting the modular charging element 300a, 300b in the same fashion as for the modular busbar 100, 100a, 100b, 100c described above, or may instead be configured for rigidly mounting the modular charging element 300a, 300b to a modular busbar element which is already rigidly mounted to a ground surface, wall surface or ceiling.

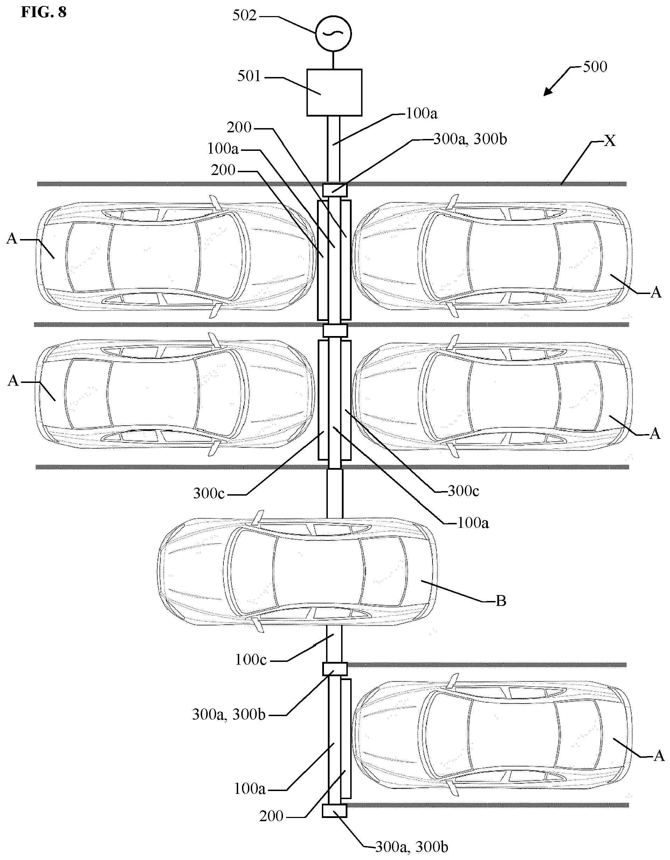

The modular busbars 100, 100a, 100b, 100c according to the first aspect and embodiments thereof, and the modular charging elements 300a, 300b, 300c according to the second aspect and embodiments thereof are configured to be combined with an electric vehicle supply equipment (EVSE) apparatus to form a charging system for charging a plurality of electric vehicles. Reference will now be made to Fig. 8, which shows an exemplary plan view of an electric vehicle parking area. According to the third aspect of the present disclosure, an electric vehicle charging area 500 suitable for charging at least one electric vehicles A is provided. The electric vehicle charging area 500 includes at least one charging spot, at least one electric vehicle supply equipment (EVSE) apparatus 501, at least one modular charging element 300a, 300b, 300c according to aspects and embodiments of the present disclosure arranged at the respective charging spots and for connecting to the respective electric vehicle A, and at least one modular busbar 100, 100a, 100b, 100c according to aspects and embodiments of the present disclosure for connecting the at least one modular charging element 300a, 300b, 300c with the at least one electric vehicle supply equipment (EVSE) apparatus 501.

As exemplarily shown in the figure, the electric vehicle charging area 500 includes a number of charging spots, each charging spot being marked with lines X, and each charging spot being reserved for parking and charging an electric vehicle A. The charging spots are typical of any parking area known in the state of the art and, for example, may correspond to a plurality of parking spots in a parking area which is to be retrofitted with electric vehicle charging infrastructure. The charging spots are preferably of a common size, more particularly a common width. The electric vehicle charging area 500 provides a plurality of charging points for charging the plurality of vehicles A parked on each charging spot.

The electric vehicle charging area may include areas intended for vehicles to travel on. For example, the exemplary electric vehicle charging area 500 has a driving lane to allow a vehicle B to travel to and from the charging spots.

The electric vehicle charging area 500 includes at least one electric vehicle supply equipment (EVSE) apparatus 501. The charging area 500 is shown as only having one EVSE apparatus 501, however the charging area 500 may include any number of EVSE apparatus 501 and may be scaled to provide current to any number of charging spots. The EVSE apparatus 501 is electrically connected to an electricity source 502 which provides electricity for the charging area 500, and the EVSE apparatus 501 is configured for providing charging current at the prescribed voltage for charging electric vehicles. The EVSE apparatus 501 may be configured to provide charging current in the form of AC current or DC current to the charging area 500. For example, the EVSE apparatus 501 may include an AC/AC converter or an AC/DC converter for providing the charging current.

For an electric vehicle charging area which includes more than one electric vehicle supply equipment (EVSE) apparatus, the electric vehicle charging area may further include at least one switch. The at least one switch may be attached to the modular busbars, particularly the at least two conductors 102 and the at least one communications line 105 of the modular busbars, so that neighboring busbars may be connected or disconnected based on signals generated by the EVSE apparatus 501. The at least one switch may be positioned in the network of modular busbars 100, 100a, 100b, 100c so that a number of zones are provided. Preferably, each EVSE apparatus 501 may be configured for supplying each respective zone in a predetermined, static manner. However, the present disclosure is not limited thereto, and by providing a number of switches throughout the network which are controllable by the plurality of EVSE apparatus 501, a dynamic zoning scheme can be applied to the charging network so that charging loads may be distributed between the plurality of EVSE apparatus 501. Branches of modular busbars and modular charging elements may be added or removed from a dynamic zone, and may be re-assigned to a different dynamic zone to be supplied by a different EVSE apparatus 501 depending on loading conditions.

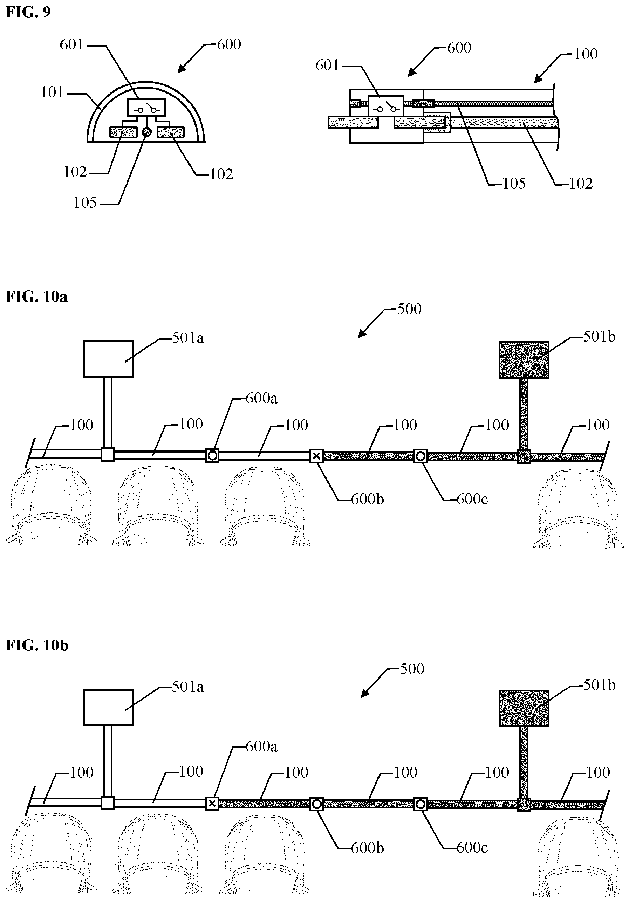

The electric vehicle charging area 500 may further include a modular switch element 600, 600a, 600b, 600c configured for attaching to at least two modular busbars 100, 100a, 100b, 100c according to aspects and embodiments of the present disclosure. An exemplary modular switch element 600 is illustrated in Fig. 9. The modular switch element 600, 600a, 600b, 600c includes at least four electrical connectors configured for electrically attaching to the respective electrical connectors of the respective modular busbars 100, 100a, 100b, 100c, at least two communications connector configured for attaching to the respective communications lines 105 of the respective modular busbars 100, 100a, 100b, 100c, and a switch configured to connect or disconnect the at least two conductors 102 of one modular busbar 100, 100a, 100b, 100c from/to the at least two conductors 102 of at least one further modular busbar 100, 100a, 100b, 100c. The switch 601 is configured to be switched in response to a signal provided on the communications line 105 of the respective modular busbars 100, 100a, 100b, 100c.

The switch 601 of the modular switch element 600 is controllable via the communications line 105 of the modular busbars 100, 100a, 100b, 100c connected thereto, and allows for one modular busbar to be selectively isolated from another modular busbar. Preferably, the modular switch element 600 further includes a communications passthrough such that the communications lines 105 of the modular busbars remains connected. Accordingly, a network of modular busbars connected together may be configured to have a single, unified communications network of communications lines 105, but the conductors 102 of the modular busbars connected together may be configured to be electrically separable into zones.

An example charging network is shown in Figs. 10a and 10b, which illustrates an electric vehicle charging area 500. The electric vehicle charging area 500 includes a plurality of EVSE apparatus 501a, 501b and a plurality of modular busbars 100 connected together to form a charging network. Three modular switch elements 600a, 600b, 600c are provided and are controllable by the EVSE apparatus 501a, 501b to dynamically change the zones of the charging network.

In Fig. 10a, the modular switch elements 600a and 600c are switched on so that the conductors 102 of the neighboring busbars 100 are connected, and modular switch element 600b is switched off so that the conductors 102 of the neighboring busbars 100 are disconnected. This forms two zones of the charging system, illustrated by a white zone and a grey zone. However, the electric vehicles attached to the charging system are not distributed evenly. A first EVSE apparatus 501a is supplying charging current for three electric vehicles, while a second EVSE apparatus 501b is supplying charging current for one electric vehicle. As exemplarily shown in Fig. 10b, to evenly distribute the charging load between the two EVSE apparatus 501a, 501b, the modular switch element 600a can be switched off to disconnect the conductors 102 of the neighboring busbars 100, and the modular switch element 600b can be switched on to connect the conductors 102 of the neighboring busbars 100, such that the grey zone is dynamically extended. After the zones are dynamically adjusted, the first EVSE apparatus 501a and the second EVSE apparatus 501b are now supplying two vehicles each.

The present disclosure is not limited only to the use of the modular switch elements 600 for distributing charging load. For example, the dynamic zone adjustment could be used to electrically isolate a failed or failing busbar or component, or a whole branch of failed or failing busbars, so that the charging system may continue operation. As a further example, the modular switch elements 600 could be used to temporarily de-energize zones or sections of the charging system for maintenance, or in response to an impact detected by the impact detectors 104. As yet a further example, the modular switch elements 600 could be used to directly connect two vehicles together for vehicle-to-vehicle (V2V) charging.

The EVSE apparatus 501 may further include a controller, computer or processor for controlling the EVSE apparatus 501, and for optionally controlling or managing the electric vehicle charging area attached thereto. The EVSE apparatus 501 may include (non-volatile) computer-readable storage media or devices, and one or more computer programs recorded on one or more computer-readable storage media or computer storage devices. The one or more computer programs can be configured to perform particular operations or processes by virtue of including instructions that, when executed by one or more processors of a system, in particular a system as explained herein, cause the system to perform the operations or processes.

The exemplary electric vehicle charging area 500 is illustrated in Fig. 8 as having an arrangement of modular busbars 100, 100a, 100b, 100c and modular charging elements 300a, 300b, 300c attached together, and attached to the EVSE apparatus 501, to form a charging system. The system as exemplarily shown has a single "zone" including one line of modular busbars and modular charging elements attached to the EVSE apparatus 501. However, the present disclosure is not limited thereto, and a single EVSE apparatus 501 could be attached to a plurality of "branches", "arms" or "zones" each including a separate line of modular busbars and modular charging elements. Alternatively, as exemplarily shown in Figs. 10a and 10b, the electric vehicle charging area 500 may be provided with multiple EVSE apparatus 501a, 501b and multiple dynamic "zones" of modular busbars 100 which are switched by a number of modular switch elements 600, 600a, 600b, 600c. For example, the electric vehicle charging area 500 could be arranged with multiple "zones" by which the plurality of charging spots is divided into separate areas served by a number of separate "arms" which each include one or more EVSE apparatus, modular busbars and modular charging elements. The arrangement of multiple "zones" may include dynamic zones or static zones, and may be divided by at least one modular switch element.

As exemplarily shown in the figure, the EVSE apparatus 501 is attached to the first modular charging element 300a, 300b via a modular busbar 100a. Subsequent modular busbars 100a in the "zone" extending away from the EVSE apparatus 501 are exemplarily shown as being further provided with stop bumpers 200 on both sides of the modular busbar 100a, providing protection to the modular busbar 100a by preventing vehicle rollover from both sides. As an example, the four electric vehicles A closest to the EVSE apparatus 501 may be attached to the charging system by connecting to a socket-type modular charging element 300a or to a retractable-type modular charging element 300b, which are provided between or aside of each or certain modular busbar 100a. Alternatively, the stop bumpers 200 may include retractable cables in the form of a retractable-type modular charging element 300c.

The exemplary figure further shows additional charging spots for further electric vehicles A provided across from a driving lane. Vehicle B is shown as travelling on the driving lane, which is traversed by the speedbump-type modular busbar 100c which is installed across the width of the driving lane to connect the two groups of charging spots. The speedbump-type modular busbar 100c is adapted for vehicle B to drive over the busbar, as described above.

The EVSE apparatus 501 may be further configured to control the de-energizing of the charging system based on signals generated by the at least one impact detector 104 embedded within each modular busbar 100, 100a, 100b, 100c. According to an embodiment, which may be combined with other embodiments described herein, the at least one electric vehicle supply equipment (EVSE) apparatus 501 may be further configured to de-energize the at least two conductors 102 in response to a signal generated by the at least one impact detector 104. For example, if one of the modular busbars 100, 100a, 100b, 100c included in an "arm" of the electric vehicle charging area is subjected to an excessive external load, such as an excessive vehicle impact or a rollover by a vehicle with excessive weight, or if one of the modular busbars 100, 100a, 100b, 100c has become damaged, the EVSE apparatus 501 can respond to the signal generated by the impact detector 104 by cutting off current supply to at least the "arm" or "zone" of busbars which are affected. If multiple "arms" or "zones" of modular busbars 100, 100a, 100b, 100c and modular charging elements 300a, 300b, 300c are connected to the EVSE apparatus 501, the EVSE apparatus 501 may be configured to de-energize only one of the "arms" or "zones", while maintaining electrical current to the conductors of all other modular busbars 100, 100a, 100b, 100c. The EVSE apparatus 501 may be further configured to re-energize the affected busbar in the situation where the external load has ceased acting on the busbar and no damage has occurred, or the EVSE apparatus 501 may be further configured to generate an automated message for maintenance to be carried out.

The electric vehicle charging area 500 described in the present disclosure may be configured as a "smart charging" solution for fully manged charging of a plurality of electric vehicles. The EVSE apparatus 501 may be further configured for management and control of the charging of the plurality of electric vehicles A. Alternatively, a separate management apparatus may be provided for management and control of the charging of the plurality of electric vehicles A. According to an embodiment, which may be combined with other embodiments described herein, the at least one electric vehicle supply equipment (EVSE) apparatus 501 is configured to manage the charging of the plurality of electric vehicles A via the at least one communications line 105 by selectively energizing and/or de-energizing the respective charging connections 301 of the plurality of modular charging elements 300a, 300b, 300c. For example, the EVSE apparatus 501 may be configured to charge predefined groups of electric vehicles A based on a charging schedule, or the EVSE apparatus 501 may be configured to limit or restrict the number of electric vehicles A being charged at any one time based on electrical demand and/or based on priority. Further, the EVSE apparatus 501 may be configured to allow fast-charging for vehicles assigned with a high priority while only allowing slow-charging for vehicles assigned with a lower priority. Further, the EVSE apparatus 501 may be configured for enabling vehicle-to-vehicle (V2V) charging which uses power from vehicles assigned with a lower priority to charge vehicles with a higher priority.

Charging systems of the present disclosure which comprise modular busbars and modular charging elements may be operated in various ways. Two such examples of charging operations are described in the following, however the present disclosure is not limited thereto.

As a first exemplary charging operation scheme, the charging system is configured only for distributing charging current. In this scheme, electric vehicles are attached to modular charging elements of the charging system for charging. Each electric vehicle comprises a charging controller, and is configured to perform its own charge management, whereby the current being drawn for charging the electric vehicle is being controlled, limited, etc by the vehicle. In this case, the charging system is configured for supplying the electrical current to the vehicle up to the predefined operational limits for the charging system. In other words, the EVSE apparatus connected to the charging system is not configured to communicate with the respective vehicles for controlling the charging of each vehicle, and is instead only configured for operating, monitoring and managing the charging system. Such a charging operation scheme may be suitable for small distribution networks where the number of electric vehicles being charged is small and the overall electrical load on the charging system is relatively low.

As a second exemplary charging operation scheme, the control and management of the charging of each respective electric vehicle is carried out by the charging system. The charging system, particularly the EVSE attached to the charging system, is in communication with the electric vehicles attached to the network, and the correct charging power and control is ensured. Management of the charging process by the charge system allows for more flexible distribution of power across the charging system, allows for scheduling of charging, and allows for load balancing to be carried out depending on the number and type of simultaneous charging operations. For example, this operation scheme may limit the charging of multiple electric vehicles which are being supplied by the same EVSE, may limit a charging speed of one or more electric vehicles being supplied by the same EVSE, or may re-configure zones of the charging system so that certain electric vehicles may be re-assigned to a different EVSE. The modular busbars and modular charging elements of the present disclosure facilitate the implementation of such flexible operation schemes.

As can be seen from the exemplary electric vehicle charging area 500 described, the modular busbars 100, 100a, 100b, 100c and modular charging elements 300a, 300b, 300c of the present disclosure provide a flexible, low-cost solution for providing charging infrastructure to a parking area, and with low installation effort. Further, the additional features provided by the modular busbars 100, 100a, 100b, 100c and the modular charging elements 300a, 300b, 300c provide enhanced safety and reliability of the charging system.

According to the fourth aspect of the present disclosure, a method of charging at least one electric vehicle A is provided. The method includes providing at least one electric vehicle supply equipment (EVSE) apparatus 501, providing at least one modular charging element 300a, 300b, 300c according to aspects and embodiments of the present disclosure, connecting the at least one modular charging element 300a, 300b, 300c to the at least one electric vehicle supply equipment (EVSE) apparatus 501 with at least one modular busbar 100, 100a, 100b, 100c according to aspects and embodiments of the present disclosure, connecting the respective electric vehicle A to the respective charging connection 301 of the at least one modular charging element 300a, 300b, 300c, and managing the charging of the at least one electric vehicle A by selectively energizing and/or de-energizing the respective charging connection 301 of the at least one modular charging elements 300a, 300b, 300c.

Although various exemplary embodiments of the invention have been disclosed, it will be apparent to those skilled in the art that various changes and modifications can be made which will achieve some of the advantages of the invention without departing from the spirit and scope of the invention. It will be obvious to those reasonably skilled in the art that other components performing the same functions may be suitably substituted. It should be mentioned that features explained with reference to a specific figure may be combined with features of other figures, even in those cases in which this has not explicitly been mentioned.

Spatially relative terms such as "under", "below", "lower", "over", "upper" and the like are used for ease of description to explain the positioning of one element relative to a second element. These terms are intended to encompass different orientations of the device in addition to different orientations than those depicted in the figures. Further, terms such as "first", "second", and the like, are also used to describe various elements, regions, sections, etc. and are also not intended to be limiting. Like terms refer to like elements throughout the description.

As used herein, the terms "having", "containing", "including", "comprising" and the like are open ended terms that indicate the presence of stated elements or features, but do not preclude additional elements or features. The articles "a", "an" and "the" are intended to include the plural as well as the singular, unless the context clearly indicates otherwise.

With the above range of variations and applications in mind, it should be understood that the present invention is not limited by the foregoing description, nor is it limited by the accompanying drawings. Instead, the present invention is limited only by the following claims and their legal equivalents.

### Reference numbers

- 100: Modular busbar
- 100a: Modular busbar configured for mounting on horizontal or vertical surface
- 100b: Modular busbar configured for spanning between two objects
- 100c: Modular busbar in speedbump configuration
- 101: Outer housing
- 102: Conductor
- 103: Electrical connector
- 104: Impact detector
- 105: Communications line
- 106: Fixture
- 200: Stop bumper
- 300a: Modular charging element, socket type
- 300b: Modular charging element, retractable cable type
- 300c: Modular charging element, stop bumper retractable cable type
- 301: Charging connection
- 302: Housing
- 303: Switching element
- 304: Socket cover
- 305: Passthrough conductor
- 306: Passthrough communications line
- 400: Charging plug
- 500: Electric vehicle charging area
- 501: Electric vehicle supply equipment (EVSE) apparatus
- A: Electric vehicle being charged
- B: Vehicle travelling on driving lane
- X: Charging spot

## Claims

1. A modular busbar (100, 100a, 100b, 100c) having a first end and a second end, the modular busbar (100, 100a, 100b, 100c) comprising:
at least two conductors (102) embedded within the modular busbar (100, 100a, 100b, 100c), such that the at least two conductors (102) extend from the first end to the second end;
an electrical connector (103) provided at each respective end of the at least two conductors (102) configured for electrically connecting the at least two conductors (102) to an element attached to the modular busbar (100, 100a, 100b, 100c);
at least one communications line (105) embedded within the modular busbar (100, 100a, 100b, 100c), such that the at least one communications line (105) extends at least from the first end to the second end; and
at least one impact detector (104) embedded within the modular busbar (100, 100a, 100b, 100c) which is configured for detecting a vehicle rollover, a mechanical impact, and/or damage to the modular busbar (100, 100a, 100b, 100c).

2. The modular busbar (100, 100a, 100b, 100c) according to claim 1, further comprising an outer housing (101) extending from the first end to the second end, wherein the outer housing (101) is configured for protecting the at least two conductors (102) from vehicle rollover, mechanical impact, water ingress and/or damage to the modular busbar (100, 100a, 100b, 100c).

3. The modular busbar (100, 100a, 100b, 100c) according to claim 2, wherein the modular busbar (100, 100a, 100b, 100c) is configured for at least one of the following:
being mounted to a horizontal surface;
being mounted to a vertical surface; or
spanning between two objects.

4. The modular busbar (100a, 100c) according to claim 2, wherein the modular busbar (100a, 100c) is configured for being mounted to a horizontal surface, and the modular busbar (100a, 100c) further comprises at least one stop bumper (200) arranged parallel to the outer housing (101), wherein the at least one stop bumper (200) is configured for preventing a vehicle rollover.

5. The modular busbar (100, 100a, 100b, 100c) according to any one of claims 1 to 4, wherein the at least one impact detector (104) is configured to generate a signal for de-energizing the at least two conductors (102) when a vehicle rollover, a mechanical impact and/or damage to the modular busbar (100, 100a, 100b, 100c) is detected.

6. The modular busbar (100, 100a, 100b, 100c) according to any one of claims 1 to 5, wherein the electrical connectors (103) comprise at least one selected from the group comprising a solder connection, a plug and socket connection, a screwed connection, and a bolted connection.

7. The modular busbar (100, 100a, 100b, 100c) according to any one of claims 1 to 6, further comprising a thermal management element configured for thermal management of the at least two conductors (102), wherein the thermal management element comprises at least one of the following:
a cooling passage for cooling the at least two conductors with a cooling liquid or gas;
an insulating material for thermally insulating the at least two conductors;
a heat sink for dissipating heat from the at least two conductors; and
a heat pipe for transferring heat away from the at least two conductors.

8. A modular charging element (300a, 300b) configured for attaching to the modular busbar (100, 100a, 100b, 100c) according to any one of claims 1 to 7, the modular charging element (300a, 300b, 300c) comprising:
at least one charging connection (301) for connecting at least one electric vehicle (A) to the modular busbar (100, 100a, 100b, 100c);
at least two electrical connectors configured for electrically attaching to the respective electrical connectors of the modular busbar (100, 100a, 100b, 100c); and
at least one communications connector configured for attaching to the at least one communications line (105) of the modular busbar (100, 100a, 100b, 100c),
wherein the at least one charging connection (301) is attachable to the at least two conductors (102) via the at least two electrical connectors and to the at least one communications line (105) via the at least one communications connector.

9. The modular charging element (300a) according to claim 8 further comprising a housing (302), and
wherein the at least one charging connection (301) comprises a socket to which a charging cable can be connected between the modular charging element (300a) and the electric vehicle (A);
wherein the at least one charging connection (301) comprises a retractable charging cable which is stored within the housing (302) and which can be connected to the electric vehicle (A); and/or
wherein the housing (302) is in the form of a stop bumper (200) which extends parallel to the modular busbar (100, 100a, 100b, 100c), and the at least one charging connection (301) comprises a retractable charging cable which is stored within the stop bumper (200).

10. The modular charging element (300a, 300b) according to any one of claims 8 and 9, further comprising:
at least two passthrough conductors (305) having respective electrical connectors; and
at least one passthrough communications line (306) having respective communications connectors,
wherein the modular charging element (300a, 300b) is suitable for attaching between at least two modular busbars (100, 100a, 100b, 100c).

11. The modular charging element (300a, 300b, 300c) according to any one of claims 8 to 10, further comprising at least one switching element (303) configured for energizing or de-energizing the charging connection (301) in response to a signal provided on the at least one communications line (105).

12. An electric vehicle charging area (500) suitable for charging at least one electric vehicle (A), the electric vehicle charging area (500) comprising:
at least one charging spot;
at least one electric vehicle supply equipment (EVSE) apparatus (501);
at least one modular charging element (300a, 300b, 300c) according to any one of claims 8 to 11 arranged at the respective charging spots and for connecting to the respective electric vehicle (A); and
at least one modular busbar (100, 100a, 100b, 100c) according to any one of claims 1 to 7 for connecting the at least one modular charging element (300a, 300b, 300c) with the at least one electric vehicle supply equipment (EVSE) apparatus (501).

13. The electric vehicle charging area (500) according to claim 12, wherein:
the at least one electric vehicle supply equipment (EVSE) apparatus (501) is configured to de-energize the conductors (102) of the at least one modular busbar (100, 100a, 100b, 100c) in response to a signal generated by the at least one impact detector (104); and/or
the electric vehicle charging area (500) further comprises at least one switch attached to the at least one modular busbar (100, 100a, 100b, 100c), wherein the at least one switch is configured to de-energize the conductors (102) of at least one modular busbar (100, 100a, 100b, 100c) in response to a signal generated by the at least one impact detector (104).

14. The electric vehicle charging area (500) according to any one of claims 12 and 13, wherein the at least one electric vehicle supply equipment (EVSE) apparatus (501) is configured to manage the charging of at least one electric vehicle (A) via the at least one communications line (105) by selectively energizing and/or de-energizing the respective charging connections (301) of the at least one modular charging element (300a, 300b, 300c).

15. A method of charging at least one electric vehicle (A), the method comprising:
providing at least one electric vehicle supply equipment (EVSE) apparatus (501);
providing at least one modular charging element (300a, 300b, 300c) according to any one of claims 8 to 11;
connecting the at least one modular charging element (300a, 300b, 300c) to the at least one electric vehicle supply equipment (EVSE) apparatus (501) with at least one modular busbar (100, 100a, 100b, 100c) according to any one of claims 1 to 7;
connecting the respective electric vehicle (A) to the respective charging connection (301) of the at least one modular charging element (300a, 300b, 300c); and
managing the charging of the at least one electric vehicle (A) by selectively energizing and/or de-energizing the respective charging connection (301) of the at least one modular charging element (300a, 300b, 300c).
